Europäisches Patentamt

European Patent Office

Office européen des brevets

(11) Veröffentlichungsnummer: **0 044 914**
**B1**

## (12) EUROPÄISCHE PATENTSCHRIFT

(45) Veröffentlichungstag der Patentschrift:
03.10.84

(51) Int. Cl.³: **B 23 Q 3/155**

(21) Anmeldenummer: 81103913.0

(22) Anmeldetag: 21.05.81

(54) Werkzeug-Magazineinrichtung für eine Werkzeugmaschine.

(30) Priorität: 19.07.80 DE 3027460
17.03.81 DE 3110307

(43) Veröffentlichungstag der Anmeldung:
03.02.82 Patentblatt 82/5

(45) Bekanntmachung des Hinweises auf die Patenterteilung:
03.10.84 Patentblatt 84/40

(84) Benannte Vertragsstaaten:
AT BE CH DE FR GB IT LI NL SE

(56) Entgegenhaltungen:
DE - A - 2 524 098
GB - A - 1 428 357
US - A - 3 779 391
US - A - 3 851 380
US - A - 4 088 417

(73) Patentinhaber: Santrade Ltd., Alpenquai 12,
CH-6002 Luzern (CH)

(72) Erfinder: Bellmann, Bernhard Günter, Dr.-Ing., Am
Holderbusch 4, D-6941 Laudenbach (DE)
Erfinder: Birkner, Horst Walter, Kaiserallee 15B,
D-7500 Karlsruhe (DE)
Erfinder: Kaminsky, Theo, Südring 5, D-6102 Pfungstadt
(DE)

(74) Vertreter: Katscher, Helmut, Dipl.-Ing.,
Bismarckstrasse 29, D-6100 Darmstadt (DE)

## Beschreibung

Die Erfindung betrifft eine Werkzeug-Magazineinrichtung für eine Werkzeugmaschine mit mindestens einem Werkzeugmagazin, einer Steuerung und einem Werkzeuggreifer, der die Werkzeuge einzeln übernimmt und zu einer Werkzeugaufnahme der Werkzeugmaschine transportiert, wobei das Werkzeugmagazin mindestens eine Längsführungsbahn für die Aufnahme von mehreren hintereinander angeordneten, jeweils gleiche Aufnahmeteile aufweisenden Werkzeugen hat.

Werkzeug-Magazineinrichtungen sind insbesondere an numerisch gesteuerten Werkzeugmaschinen in zahlreichen Ausführungsformen bekannt. Sie dienen dazu, mehrere, meist unterschiedliche Werkzeuge für einen automatisch gesteuerten Werkzeugwechsel bereitzuhalten.

In der Fertigungstechnik stellt sich zunehmend die Förderung, Werkzeugmaschinen auch über längere Zeiträume selbsttätig zu steuern, ohne dass ein Eingriff einer Bedienungsperson erforderlich ist. Diese Forderung ergibt sich insbesondere aus dem Bestreben, Werkzeugmaschinen in der Fertigung während einer gesamten Arbeitsschicht, vor allem einer Nachtschicht, automatisch gesteuert zu betreiben.

Bei einer bekannten Werkzeug-Magazineinrichtung der eingangs genannten Gattung (BG-A-1 428 357) ist das Werkzeugmagazin selbst mit einer verhältnismässig aufwendigen Antriebseinrichtung versehen, um die im Werkzeugmagazin enthaltenen Werkzeuge zu verschieben, um das jeweils benötigte einzelne Werkzeug in eine Übernahmeposition zu bringen, aus der es von dem Werkzeuggreifer übernommen werden kann. Obwohl dieses Werkzeugmagazin abnehmbar an der Werkzeugmaschine angebracht ist, ist es wegen der eingebauten Antriebseinrichtung für Werkzeuge so schwer und aufwendig gebaut, dass es nicht dazu geeignet ist, jeweils bei der Umstellung auf ein anderes Werkstück oder sogar nur zum Austausch der abgenutzten Werkzeuge ausgewechselt zu werden. Statt dessen verbleibt das Werkzeugmagazin an der Werkzeugmaschine; nur die einzelnen Werkzeuge werden ausgewechselt.

Die Möglichkeiten für einen selbsttätigen Werkzeugwechsel sind durch die konstruktiven Eigenheiten des bekannten Werkzeugmagazins sehr beschränkt. Es ist zwar grundsätzlich möglich, in mehreren Speicherplätzen des Werkzeugmagazins gleiche Werkzeuge aufzunehmen, die nacheinander zum Einsatz gebracht werden. Dabei ist der Aufwand für die Codierung, die Steuerung und die Überwachung jedoch verhältnismässig hoch, da jedes einzelne Werkzeug bzw. jeder einzelne Speicherplatz im Werkzeugmagazin codiert werden muss.

Wenn sich die Codierung auf die einzelnen Speicherplätze des Werkzeugmagazins beschränkt, besteht die Gefahr, dass der zwar richtig codierte Speicherplatz mit einem falschen Werkzeug bestückt wird, dessen Einsatz dann zu schweren Schäden führen kann. Die Codierung jedes einzelnen Werkzeugs erweist sich aber als umso schwieriger und aufwendiger, je weniger Platz am Werkzeug hierfür zur Verfügung steht. Andererseits ist man aus mehreren Gründen aber bestrebt, die auszuwechselnden Werkzeuge so klein wie möglich und deren Aufbau so einfach wie möglich zu halten.

Bei der bekannten Werkzeug-Magazineinrichtung ist die Umstellung auf die Bearbeitung eines anderen Werkstücks mit verhältnismässig grossem Aufwand verbunden, weil alle im Werkzeugmagazin vorhandenen Werkzeuge herausgenommen werden müssen und das Werkzeugmagazin neu bestückt werden muss, wodurch eine verhältnismässig lange Stillstandszeit der Maschine bedingt ist. Gegebenenfalls muss hierbei noch eine Codierung der einzelnen Speicherplätze des Werkzeugmagazins der Werkzeugmaschine erfolgen, wodurch sich der erforderliche Zeitaufwand noch erhöht.

Bei einer anderen bekannten Werkzeug-Magazineinrichtung (US-A-3 779 391) sind mehrere, jeweils unterschiedliche Werkzeuge in einem gemeinsamen Werkzeugträger enthalten. Mehrere Werkzeugträger sind in einer Trommel aufgenommen und bilden ein drehbares Werkzeugmagazin. Zur Entnahme eines Werkzeugs durch einen Werkzeuggreifer wird ein Werkzeugträger aus der Trommel herausbewegt, bis sich das gewünschte Werkzeug in der Übergabeposition befindet. Eine lösbare Anbringung ist weder für die einzelnen Werkzeugträger noch für die Trommel vorgesehen, so dass die verbrauchten Werkzeuge einzeln aus den Werkzeugträgern entnommen und ausgetauscht werden müssen. Deshalb ist eine Codierung jedes einzelnen Werkzeugs erforderlich.

Aufgabe der Erfindung ist es daher, eine Werkzeug-Magazineinrichtung der eingangs genannten Gattung zu schaffen, die mit geringem Bauaufwand und Arbeitsaufwand eine rasche und einfache Umstellung bei der Bearbeitung unterschiedlicher Werkstücke ermöglicht.

Diese Aufgabe wird erfindungsgemäss dadurch gelöst, dass das Werkzeugmagazin und eine Werkzeugmagazinaufnahme mit Mitteln zum lösbaren Ankuppeln des Werkzeugmagazins an der Werkzeugmagazinaufnahme versehen sind und dass die Werkzeugmagazinaufnahme eine Vorschubeinrichtung für jedes einzelne der in dem Werkzeugmagazin befindlichen Werkzeuge enthält. Die gesamte Magazineinrichtung der Werkzeugmaschine weist daher ein oder vorzugsweise mehrere, einzeln herausnehmbare Werkzeugmagazine auf. Da alle Werkzeugmagazine einzeln herausnehmbar sind, können in einfacher Weise mehrere gleiche Werkzeuge bei einer Umstellung der Bearbeitung ausgetauscht werden, ohne dass es hierzu erforderlich wäre, die Werkzeuge einzeln aus den Magazinspeicherplätzen herauszunehmen und das Magazin neu zu bestücken. Da die einzelnen Werkzeuge in jedem der Werkzeugmagazine längsverschiebbar sind, genügt es, für jedes einzelne Werkzeugmagazin, das gleiche Werkzeuge enthält, einen einzigen Übergabeplatz an den Werkzeuggreifer vorzusehen, ohne dass hierfür eine Bewegbarkeit des Werkzeugmagazins selbst erforderlich wäre.

In besonders vorteilhafter Ausgestaltung des Erfindungsgedankens ist vorgesehen, dass jedes Werkzeugmagazin einen Codierträger aufweist, dessen den aufgenommenen Werkzeugen zugeordnete Codierung durch jeweils einen an dem Magazinaufnahmeplatz der Werkzeugmagazine angeordneten Codierungsleser erfassbar und einer Steuerungseinrichtung zuführbar ist. Damit wird eine wesentliche Erhöhung der Arbeitssicherheit auch bei automatisiertem Betriebsablauf erreicht, weil weder eine Codierung jedes einzelnen Werkzeugs noch eine Codierung der einzelnen Magazinspeicherplätze an der Maschine erforderlich ist. Es genügt vielmehr, die einzelnen, jeweils mehrere gleiche Werkzeuge aufnehmenden Werkzeugmagazine zu codieren, die beliebig in die fest codierten Aufnahmeplätze an der Maschine eingesetzt werden können. Die Codierung der einzelnen Werkzeugmagazine erfolgt ausserhalb der Werkzeugmaschine im Rahmen der Fertigungsvorbereitung und kann deshalb ohne Zeitdruck und mit grosser Zuverlässigkeit, bedingt durch die Möglichkeit von Kontrollen, durchgeführt werden. Die erforderlichen Stillstandszeiten der Werkzeugmaschine werden wesentlich herabgesetzt, vor allem auch bei der Umstellung auf andere Werkstücke, weil es nicht mehr erforderlich ist, einzelne Magazinspeicherplätze zu bestücken, da nur noch die einzelnen vollständigen Werkzeugmagazine ausgewechselt werden.

Auch wenn die Werkzeugmagazine in anderer als der vorgesehenen Anordnung und Reihenfolge eingesetzt werden, sind Arbeitsfehler der Werkzeugmaschine ausgeschlossen, weil die an den Magazinaufnahmeplätzen angeordneten Codierungsleser eine Information darüber erhalten und an die Steuerung weiterleiten, welche Werkzeuge an dem betreffenden Magazinaufnahmeplatz zur Verfügung stehen. Die Steuerung kann dann die Bewegung des Werkzeuggreifers oder der Magazinaufnahmen entsprechend steuern.

In einer konstruktiv besonders einfachen Ausführungsform der Erfindung ist vorgesehen, dass die Vorschubeinrichtung mindestens einen im Werkzeugmagazin längsverschiebbaren Vorschubkamm aufweist, dessen Kammzinken jeweils zwischen die einzelnen in der Längsführungsbahn angeordneten Werkzeuge in und ausser Eingriff quer zur Längsführungsbahn bewegbar sind. Der Vorschubkamm transportiert gleichzeitig alle Werkzeuge und hält dabei deren gegenseitige Zuordnung aufrecht.

Zweckmässigerweise ist im Werkzeugmagazin ein Arretierungskamm nur quer zur Längsführungsbahn verschiebbar, dessen Kammzinken jeweils zwischen die einzelnen in der Längsführungsbahn angeordneten Werkzeuge in und ausser Eingriff bewegbar sind. Dieser Arretierungskamm stellt sicher, dass die gegenseitige Zuordnung der einzelnen in einer Längsführungsbahn aufgenommenen Werkzeuge auch dann zuverlässig erhalten bleibt, wenn der Vorschubkamm ausser Eingriff mit den Werkzeugen ist. Dazu erfolgt die Querbewegung des Vorschubkamms und des Arretierungskamms vorzugsweise im Gleichlauf.

Eine besonders vorteilhafte Ausführungsform ist dadurch gekennzeichnet, dass in dem Werkzeugmagazin zwei parallel nebeneinanderliegende Längsführungsbahnen vorgesehen sind. Während eine der beiden Längsführungsbahnen die für den Werkzeugwechsel bereitstehenden neuen Werkzeuge enthält, können die jeweils verbrauchten und zurückgewechselten Werkzeuge in der zweiten Längsführungsbahn aufgenommen werden. Der Transportvorgang in jedem einzelnen Werkzeugmagazin ist dabei besonders einfach, weil dem Vorschieben eines neuen Werkzeugs jeweils das Zurückschieben eines verbrauchten Werkzeugs entspricht. Deshalb ist es in konstruktiv sehr einfacher Weise möglich, jeweils die den beiden Längsführungsbahnen zugeordneten beiden Vorschubkämme und die beiden Arretierungskämme miteinander starr zu verbinden und gemeinsam anzutreiben.

Die Einhaltung der Abstände zwischen den einzelnen Werkzeugen in denjenigen Zeitabschnitten, in denen sich der Vorschubkamm ausser Eingriff mit den Werkzeugen befindet, kann auch durch federnde Rasteinrichtungen erfolgen, die jeweils mit den einzelnen Werkzeugen in Eingriff stehen. Dann ist kein Arretierungskamm erforderlich. Der Vorschubkamm kann im herausnehmbaren Werkzeugmagazin oder in der Werkzeugmaschine an mindestens einem von mehreren Magazinaufnahmeplätzen gelagert sein. Wenn der Vorschubkamm im Werkzeugmagazin gelagert ist, kann die Antriebseinrichtung für den Vorschubkamm entweder in jedem einzelnen Werkzeugmagazin oder wiederum an mindestens einem von mehreren Magazinaufnahmeplätzen der Werkzeugmaschine angeordnet sein.

Für die Bewegung der Kammzinken in und ausser Eingriff mit den Werkzeugen sind unterschiedliche Bewegungsabläufe und Antriebsarten möglich. So kann der Vorschubkamm zusätzlich zu seiner Längsbewegung zu einer Querbewegung angetrieben werden; wenn die Kammzinken jeweils eine in einer gemeinsamen Richtung abfallende Auflauffläche für die Werkzeuge aufweisen und in Querrichtung entweder einzeln oder gemeinsam federnd abgestützt sind, kann die Querbewegung bei der Rückzugs-Längsbewegung des Vorschubkamms selbsttätig ausgeführt werden.

Weitere vorteilhafte Merkmale der Erfindung sind Gegenstand von Unteransprüchen.

Die Erfindung wird nachfolgend an Ausführungsbeispielen näher erläutert, die in der Zeichnung dargestellt sind. Es zeigt:

Fig. 1 ein Werkzeugmagazin mit zwei Längsführungsbahnen in Draufsicht,

Fig. 2 einen Schnitt längs der Linie II–II in Fig. 1,

Fig. 3 einen Schnitt längs der Linie III–III in Fig. 1,

Fig. 4a, b Teilansichten in Richtung der Pfeile IV–IV in Fig. 2,

Fig. 5a–e vereinfachte Draufsichten auf ein Werkzeugmagazin in aufeinanderfolgenden Arbeitsstellungen, wobei ein Werkzeuggreifer angedeutet ist,

Fig. 6 eine schematische Darstellung mehrerer Werkzeugmagazine in einer Werkzeugmaschine, wobei ein Teil der zugehörigen Steuerung im Blockschaltbild dargestellt ist,

Fig. 7, 9, 11, 13 und 15 jeweils in vereinfachten Längsschnitten verschiedene Ausführungsformen von Werkzeugmagazinen,

Fig. 8, 10, 12 und 14 jeweils die zugehörigen Stirnansichten der vorher dargestellten Werkzeugmagazine,

Fig. 17 ein portalförmiges Werkzeugmagazin mit darin aufgenommenen Werkzeugen und

Fig. 18 eine Stirnansicht des Werkzeugmagazins nach Fig. 17.

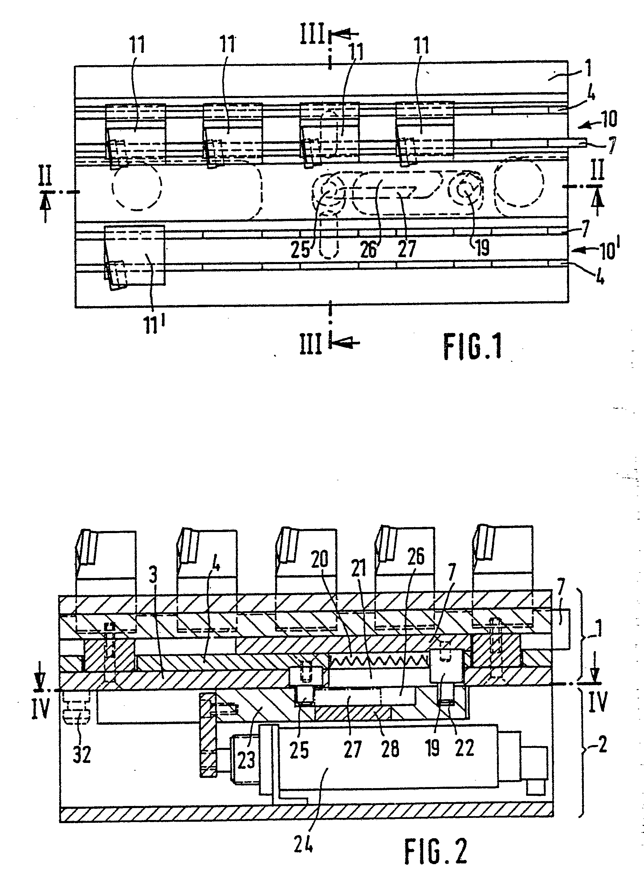

Das in den Fig. 1–4 gezeigte Werkzeugmagazin 1 ist als herausnehmbare Baueinheit auf einer Werkzeugmagazin-Aufnahme 2 angeordnet, die einen Teil der Werkzeugmaschine bildet. Das Werkzeugmagazin 1 weist einen im Querschnitt trogförmigen Grundkörper 3 auf, in dem zwei zu einem im Querschnitt U-förmigen Bauteil verbundene Arretierungskämme 4 mittels Passfedern 5 querverschiebbar geführt sind. In Längsführungen 6 sind zwei ebenfalls zu einem U-förmigen Bauteil miteinander verbundene Vorschubkämme 7 längsbeweglich geführt.

An der Oberseite des Werkzeugmagazins 1 bilden zwei Paare von sich jeweils gegenüberliegenden Führungsschienen 8, 9 bzw. 8', 9' zwei parallele Führungsbahnen 10, 10' für Werkzeuge 11, 11'. Bei dem dargestellten Ausführungsbeispiel handelt es sich bei den Werkzeugen 11, 11' um Drehmeissel mit einem verhältnismässig kurzen Meisselschaft 12, an dem seitlich zwei Führungsnuten 13 ausgebildet sind, in die die Führungsschienen 8, 9 bzw. 8', 9' greifen. Jeweils die inneren Führungsschienen 9, 9' sind in Querrichtung gegen Federkraft verschiebbar, um die Werkzeuge 11, 11' freizugeben, wenn diese aus dem Werkzeugmagazin herausgenommen oder in dieses eingesetzt werden sollen.

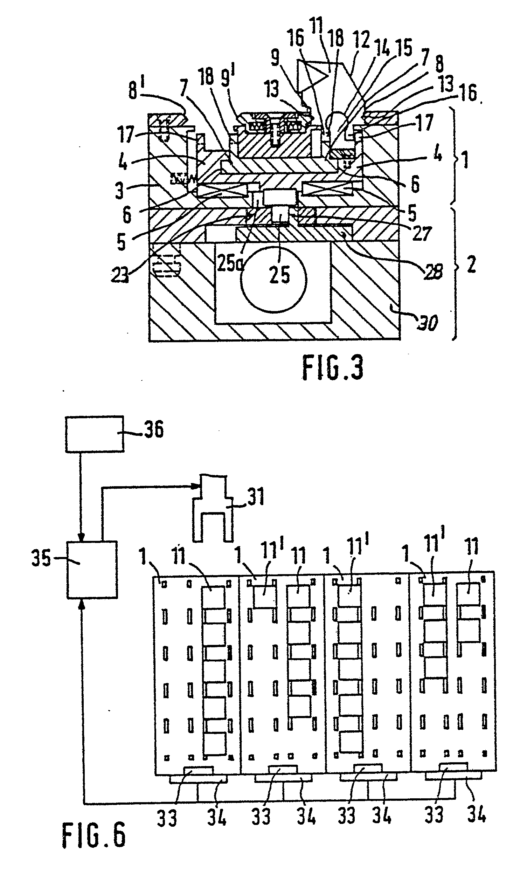

Der Werkzeugschaft 12 weist an seinem hinteren Ende einen zu einer Bohrung 14 erweiterten Schlitz 15 auf, der zwei Flansche 16 trennt. Die Flansche 16 der Werkzeuge 11, 11' ragen zwischen Zinken 17 der Arretierungskämme 4 und zwischen Zinken 18 der Vorschubkämme 7. Abhängig von deren Querbewegungsstellung stehen die Flansche 16 entweder mit den Zinken 18 der Vorschubkämme 7 (wie in Fig. 3 dargestellt) oder mit den Zinken 17 der Arretierungskämme 4 in Eingriff.

Die Vorschubkämme 7 sind mit einem Antriebszapfen 19 verbunden, der durch einen Längsschlitz 20 der Arretierungskämme 4 und einen Längsschlitz 21 des Grundkörpers 3 bis in eine schräg zur Verschieberichtung verlaufende Mitnahmenut 22 in einem Kulissenbauteil 23 ragt, das in der Magazinaufnahme 2 in Richtung der Längsführungsbahnen 10 verschiebbar geführt ist. Der Bewegungsantrieb des Kulissenbauteils 23 erfolgt durch eine druckmittelbetätigte Kolben-Zylinder-Einheit 24.

Die Arretierungskämme 4 sind mit einem Antriebszapfen 25 verbunden, der durch einen Querschlitz 25a im Grundkörper 3 in eine breite Längsnut 26 des Kulissenbauteils 23 ragt.

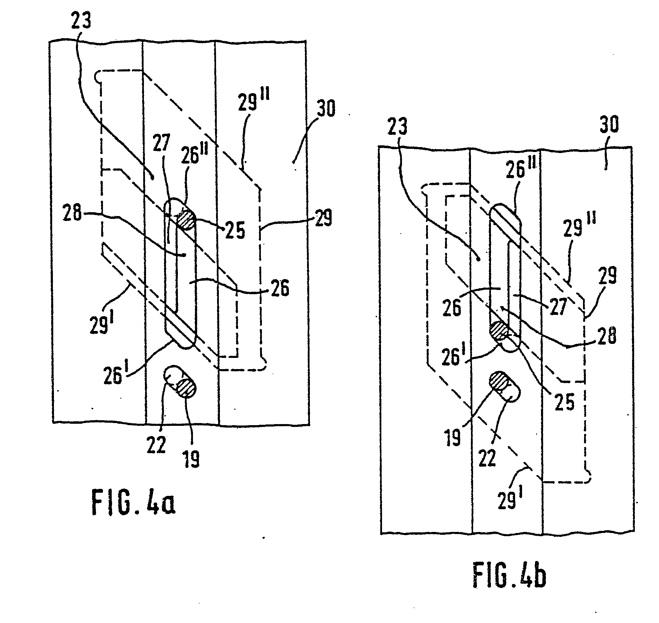

In der breiten Längsnut 26 des Kulissenbauteils 23 ist eine nach oben ragende Leiste 27 eines Umlenkschiebers 28 querbeweglich angeordnet. Der Umlenkschieber 28 erstreckt sich schräg zur Längsrichtung der Magazinaufnahme 2 und liegt in einer trapezförmigen Ausnehmung 29 einer gestellfesten Grundplatte 30. Wenn der Umlenkschieber 28 bei der Längsbewegung des Kulissenbauteils 23 jeweils eine der beiden schrägen Führungsflächen 29' bzw. 29" an den Enden der Ausnehmung 29 berührt, wird der Umlenkschieber 28 nach rechts oder links verschoben, so dass die Leiste 27 entweder rechts oder links im Längsschlitz 26 zur Anlage kommt, wie in den Fig. 4a und 4b dargestellt ist.

Wie man besonders deutlich aus den Fig. 4a und 4b erkennt, wird die Längsnut 26 an ihren beiden Enden durch schräg zur Vorschubrichtung verlaufende Führungsflächen 26' und 26" begrenzt, die parallel zur Mitnahmenut 22 ausgerichtet sind.

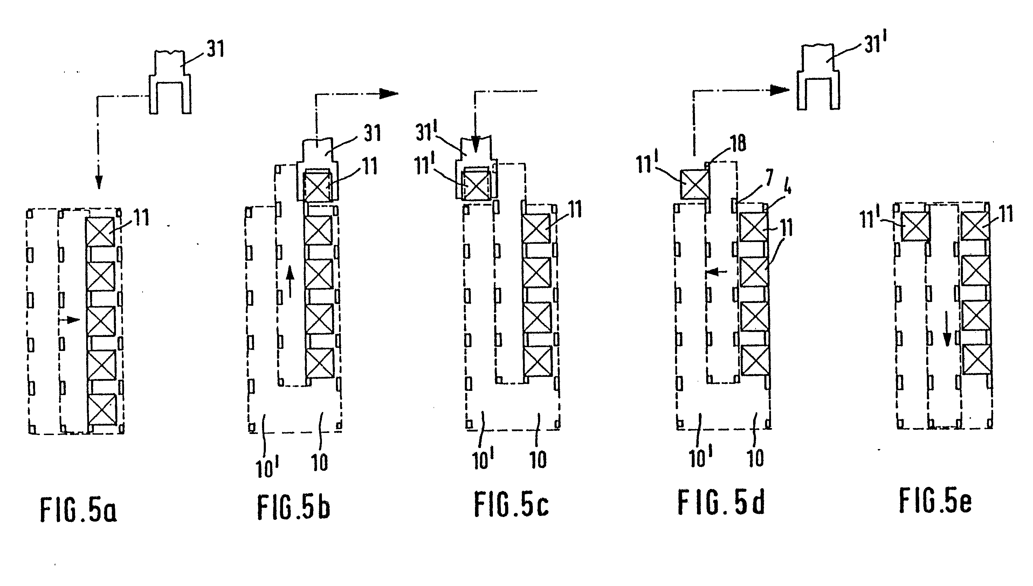

Bei der Längsverschiebung des Kulissenbauteils 23 wird in der Stellung nach Fig. 3, d.h. beim Eingriff der Kammzinken 18 des Vorschubkamms 7 an den Werkzeugen 11, der Vorschubkamm 7 über seinen Antriebszapfen 19 zu einer Längsbewegung mitgenommen. Dabei wird das vorderste Werkzeug 11 in einen Werkzeuggreifer 31 eingeschoben, wie in Fig. 5b dargestellt ist. Die Antriebszapfen 19 und 25 und der Umlenkschieber 28 nehmen dabei die in Fig. 4a gezeigte Stellung ein. Am Ende dieses Bewegungsablaufs übernimmt der Werkzeuggreifer 31 das Werkzeug 11 und transportiert es in die Werkzeugaufnahme der Werkzeugmaschine. Zugleich übernimmt ein zweiter Werkzeuggreifer 31' ein auszuwechselndes, verbrauchtes Werkzeug 11', das er an den Anfang der zweiten Führungsbahn 10' transportiert (Fig. 5c).

Wenn jetzt die Bewegungsrichtung der Kolben-Zylinder-Einheit 24 umgesteuert wird, gelangt der Umlenkschieber 28 durch die von der Führungsfläche 29' ausgeübte Querkraft in die in Fig. 4b gezeigte Stellung. Die Arretierungskämme 4 und die Vorschubkämme 7 werden nach links verschoben (Fig. 5d), wobei die Werkzeuge 11 der Längsführungsbahn 10 mit dem Arretierungskamm 4 in Eingriff treten, wobei der zugehörige Vorschubkamm 7 ausser Eingriff mit diesen Werkzeugen 11 gelangt. Zugleich treten in der Längsführungsbahn 10' zwei Kammzinken 18 des Vorschubkamms 7 mit dem Werkzeug 11' in Eingriff. In dieser Stellung beginnt die Rückzugbewegung des Kulissenbauteils 23, bis das Werkzeug 11' die in Fig. 5e gezeigte Stellung erreicht hat. Vor Beginn des entgegengesetzten Bewegungshubs des Kulissenbauteils 23 werden in entsprechender Weise wieder die Arretierungskämme 4 und die Vorschubkämme 7 nach rechts verschoben (Fig. 5a), so dass die Werkzeuge 11 nach vorn geschoben werden können. Aus dem in den Fig. 5a bis 5e dargestellten Bewegungsablauf erkennt man, dass die in den Längsführungsbahnen 10 und 10' aufgenommenen Werkzeuge 11 und 11' jeweils entweder durch die Kammzinken der Arretierungskämme 4 oder der Vorschubkämme 7 voneinander getrennt und in ihrer gegenseitigen Zuordnung gehalten werden. Obwohl eine Längsbewegung und eine Querbewegung ausgeführt werden muss, genügt ein einfacher Längsbewegungsantrieb durch die Kolben-Zylinder-Einheit 24, da die Querverschiebung an den Enden des Längshubs selbsttätig erfolgt. Beim Auswechseln der Werkzeugmagazine 1 bereitet die Abkupplung des Antriebs keine Schwierigkeiten, weil nur die Antriebszapfen 19 und 25 aus den zugehörigen Öffnungen des Kulissenbauteils 23 herausgenommen bzw. in diese eingesetzt werden müssen.

Zur Ausrichtung und Verriegelung der Werkzeugmagazine 1 in der Magazinaufnahme 2 sind die Werkzeugmagazine 1 mit abgesetzten Zapfen 32 versehen, die in entsprechende Bohrungen der Magazinaufnahme 2 reichen und dort verriegelt werden.

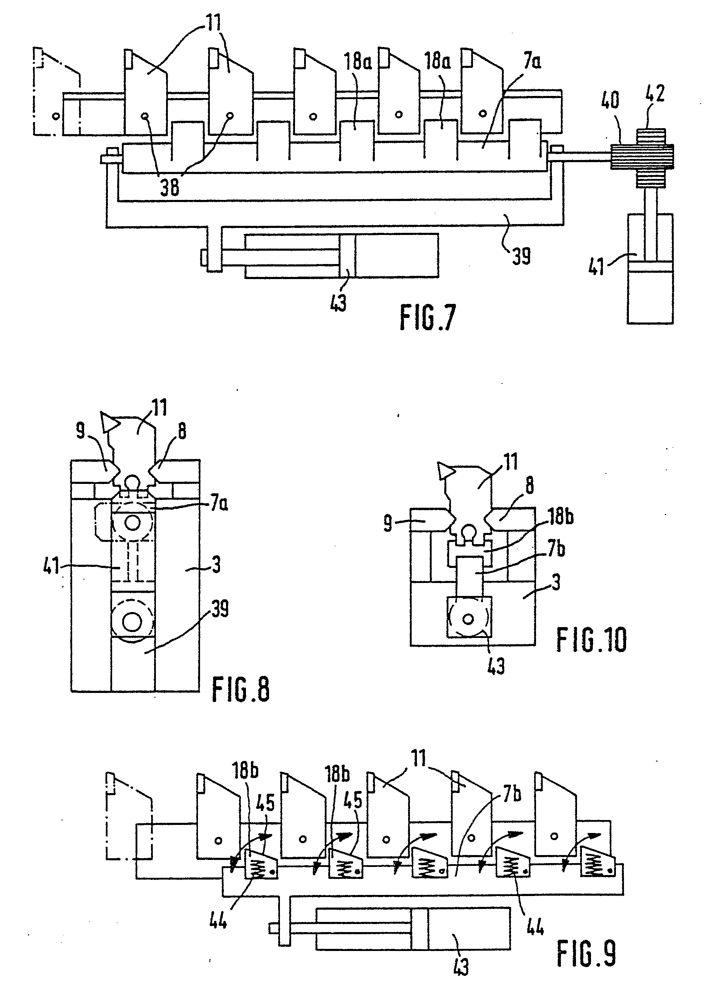

Fig. 6 zeigt vereinfacht die Anordnung mehrerer Werkzeugmagazine 1 an einer Werkzeugmaschine. Jedes Werkzeugmagazin 1 nimmt mehrere, jeweils unter sich gleiche Werkzeuge 11 auf. In Fig. 6 ist nur schematisch angedeutet, dass jedes Werkzeugmagazin 1 einen Codierträger 33 aufweist, der in einer hier nicht näher beschriebenen Weise beispielsweise mechanisch oder magnetisch eine Codierung trägt, die eine Information über die Art der jeweils aufgenommenen Werkzeuge 11 enthält. Die Codierträger 33 werden jeweils von einem am Magazinaufnahmeplatz der Werkzeugmaschine angeordneten Codierungsleser 34 abgetastet, der die Magazincodierung, die zugleich die Werkzeugcodierung ist, an eine Umcodierungseinrichtung 35 liefert. Von einer Steuerungseinrichtung 36 der Werkzeugmaschine wird an die Umcodierungseinrichtung 35 eine Information über die für den jeweiligen Bearbeitungsvorgang geforderte Werkzeugcodierung gegeben. Die Umcodierungseinrichtung 35 gibt an die Steuerung des Werkzeuggreifers 31 einen Befehl, an denjenigen Magazinaufnahmeplatz der Werkzeugmaschine zu fahren, an dem die entsprechende Werkzeugcodierung durch den Codierungsleser 34 gelesen wurde. Unabhängig davon, in welcher Anordnung die Werkzeugmagazine 1 eingesetzt wurden, findet der Werkzeuggreifer 31 dort ein Werkzeug 11 mit den durch die Steuerung 36 vorgegebenen Eigenschaften vor.

Zur Vergrösserung der Magazin-Speicherkapazität können zwei oder mehr Werkzeugmagazine 1 unmittelbar hintereinander angeordnet werden. Der Antrieb des oder der nachgeordneten Werkzeugmagazine 1 kann von der Kolben-Zylinder-Einheit 24 des ersten Werkzeugmagazin 1 erfolgen, deren Kolbenstange dann mit einer oder mehreren weiteren Kulissenbauteilen 23 verbunden werden. Die Übergabe der Werkzeuge 11, 11' erfolgt zwischen den einzelnen Werkzeugmagazinen 1 in einfacher Weise durch Überschieben.

Anstelle von nur gleichen Werkzeugen in einem Werkzeugmagazin können auch unterschiedliche Werkzeuge in demselben Magazin untergebracht werden, wobei dann in der Steuerung eine Information darüber gespeichert ist, welche Werkzeuge sich an welchem Platz im Werkzeugmagazin befinden.

Bei einbahniger Ausführung der Werkzeugmagazine 1 für Werkzeuge 11 kann eine gemeinsame Rückführung der verbrauchten Werkzeuge 11' vorgesehen sein.

Die Magazinaufnahmen 2 können an der Werkzeugmaschine auch beweglich, beispielsweise verfahrbar oder schwenkbar, angebracht sein, um das jeweils benötigte Magazin 1 in die Übergabeposition für den Werkzeuggreifer 31 zu bringen.

Anstelle der Werkzeuge 11 oder zusätzlich zu diesen können auch Messfühler in den Werkzeugmagazinen aufgenommen werden.

Beim Ausführungsbeispiel nach den Fig. 7 und 8 sind – ebenso wie bei den folgenden Ausführungsbeispielen – die Werkzeuge 11 mit seitlichen Rastbohrungen 38 versehen, in die an den Führungsschienen 8, 9 federnd gelagerte (nicht dargestellte) Rastkugeln einrasten. Durch diese Rasteinrichtung werden die Werkzeuge 11 in ihren Stellungen mit vorgegebenem Abstand gehalten, wenn sich die Zinken des Vorschubkamms ausser Eingriff mit den Werkzeugen befinden. Bei der Ausführung nach den Fig. 7 und 8 ist der Vorschubkamm 7a als Nockenwelle ausgebildet, die in einem im Grundkörper 3 des Werkzeugmagazins längsverschiebbaren Schlitten 39 schwenkbar gelagert ist. Die Kammzinken 18a bilden die Nocken der Nockenwelle und greifen in der dargestellten Schwenkstellung zwischen die einzelnen Werkzeuge 11. Der Vorschubkamm 7a ist mit einem Ritzel 40 verbunden, das durch eine Kolben-Zylinder-Einheit 41 über eine Zahnstange 42 zu einer Schwenkbewegung um 90° antreibbar ist.

Eine Kolben-Zylinder-Einheit 43 treibt den Schlitten 39 zu seiner Vorschub-Längsbewegung an, wobei die mit den Werkzeugen 11 in Eingriff stehenden Kammzinken 18a die Werkzeuge 11 jeweils um einen Schritt weiterbewegen. Am Ende der Vorschubbewegung werden die Kammzinken 18a ausser Eingriff mit den Werkzeugen 11 in die in Fig. 8 mit strichpunktierten Linien gezeigte Schwenkstellung geschwenkt; der Schlitten 39 fährt zurück bis in seine Ausgangsstellung, in der die Kammzinken 18a wieder in Eingriff mit den Werkzeugen 11 geschwenkt werden. Bei einem Werkzeugmagazin, das verbrauchte Werkzeuge 11' aufnimmt, erfolgt der Bewegungsablauf in umgekehrter Richtung.

Beim Beispiel nach den Fig. 9 und 10 wird ebenfalls ein im Werkzeugmagazin längsverschiebbarer Vorschubkamm 7b durch die im Werkzeugmagazin angeordnete Kolben-Zylinder-Einheit 43 angetrieben. Hierbei sind die Kammzinken 18b als einzeln am Vorschubkamm 7b schwenkbar gelagerte Klinken ausgebildet, die jeweils durch eine Druckfeder 44 in ihre hinter die Werkzeuge 11 greifende Stellung gedrückt werden. Die Kammzinken 18b weisen jeweils eine nach hinten abfallende Auflauffläche 45 für die Werkzeuge 11 auf. Bei der Rückzugsbewegung des Vorschubkamms 7b werden die Kammzinken 18b durch die Werkzeuge 11 nach unten gedrückt und gleiten dadurch an den Werkzeugen 11 vorbei, ohne diese mitzunehmen. In Werkzeugmagazinen zur Aufnahme von verbrauchten Werkzeugen 11' sind die schwenkbaren Kammzinken 18b in entgegengesetzter Richtung angeordnet.

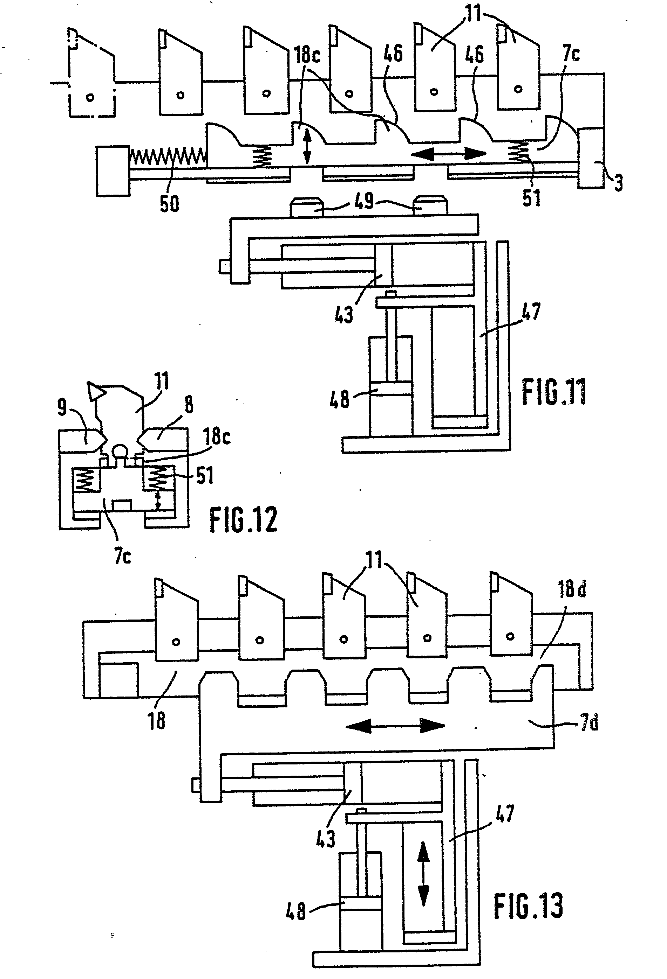

Im Gegensatz zu den Ausführungsbeispielen nach den Fig. 7 bis 10 ist bei der Ausführung nach den Fig. 11 und 12 die die Vorschubbewegung ausführende Kolben-Zylinder-Einheit 43 nicht an jedem einzelnen Werkzeugmagazin, sondern nur an mindestens einem von mehreren Magazinaufnahmeplätzen der Werkzeugmaschine angeordnet, nämlich dort, wo eine Übergabe oder Übernahme der Werkzeuge 11 bzw. 11' erfolgen soll.

Im Grundkörper 3 des Werkzeugmagazins ist der Vorschubkamm 7c in Längsrichtung und Querrichtung federnd beweglich gelagert. Die Kammzinken 18c sind starr mit dem Vorschubkamm 7c verbunden und weisen an ihrer Oberseite jeweils eine in einer gemeinsamen Richtung abfallende Auflauffläche 46 für die Werkzeuge 11 auf.

Ein die Kolben-Zylinder-Einheit 43 aufnehmender Träger 47 ist durch eine Kolben-Zylinder-Einheit 48 anhebbar, um Antriebszapfen 49 in Eingriff mit dem Vorschubkamm 7c zu bringen, so dass die Kolben-Zylinder-Einheit 43 den Vorschubkamm 7c zu einer Vorschubbewegung antreiben kann, wobei die Kammzinken 18c die Werkzeuge 11 mitnehmen. Am Ende der Vorschubbewegung wird der Träger 47 durch die Kolben-Zylinder-Einheit 48 nach unten gezogen, so dass die Antriebszapfen 49 ausgekoppelt werden. Die Kammzinken 18c und damit der Vorschubkamm 7c werden durch Druckfedern 51 nach unten und ausser Eingriff mit den Werkzeugen 11 bewegt. Unter der Wirkung einer Druckfeder 50 gleitet der Vorschubkamm 7c in seine Ausgangsstellung zurück.

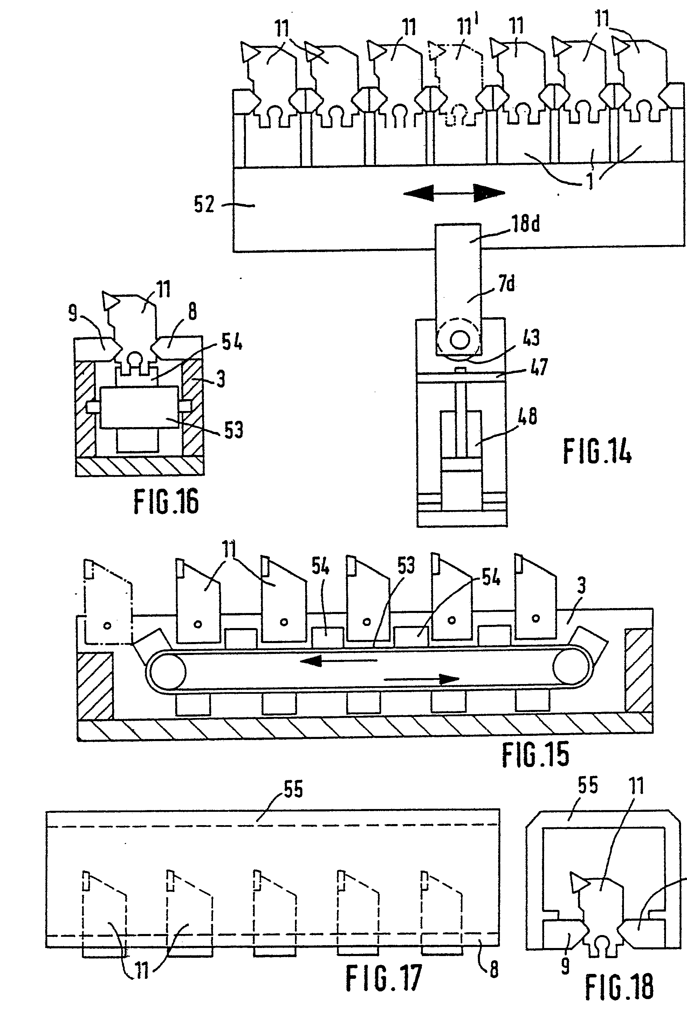

Ähnlich wie beim Ausführungsbeispiel nach den Fig. 11 und 12 ist auch beim Beispiel nach den Fig. 13 und 14 nur an einem oder nur an einzelnen Magazinaufnahmeplätzen der Werkzeugmaschine eine Antriebseinrichtung für den Vorschub der Werkzeuge 11 im Werkzeugmagazin vorgesehen. Auch hierbei ist die Kolben-Zylinder-Einheit 43 mit ihrem höhenbeweglichen Träger 47 durch die Kolben-Zylinder-Einheit 48 in senkrechter Richtung bewegbar. Im Gegensatz zum vorher beschriebenen Beispiel ist jedoch die Kolben-Zylinder-Einheit 43 unmittelbar mit dem Vorschubkamm 7d verbunden, während die einzelnen Werkzeugmagazine keinen Vorschubkamm mehr aufweisen. Die starr mit dem Vorschubkamm 7d verbundenen Kammzinken 18d treten mit den Werkzeugen 11 bzw. 11' in Eingriff, wenn der Träger 47 durch die Kolben-Zylinder-Einheit 48 angehoben wird. In dieser Stellung führt die Kolben-Zylinder-Einheit 43 eine Vorschubbewegung aus, an deren Ende der Vorschubkamm 7d wieder nach unten zurückgezogen wird, um seine Rückzugsbewegung ausser Eingriff mit den Werkzeugen 11 auszuführen.

Aus Fig. 14 erkennt man, dass nebeneinander mehrere Werkzeugmagazine 1 auf einem gemeinsamen Magazinschlitten 52 angeordnet sind, der quer zur Magazinlängsrichtung verschiebbar ist, um das jeweils gewünschte Werkzeugmagazin in die Vorschubposition über dem Vorschubkamm 7d zu bringen.

Man erkennt aus Fig. 14, dass in der Mitte des Magazinschlittens 52 ein Werkzeugmagazin für verbrauchte Werkzeuge 11' angeordnet ist. Beiderseits davon befinden sich Werkzeugmagazine für neue Werkzeuge 11.

Im Grundkörper 3 des Werkzeugmagazins nach den Fig. 15 und 16 ist als Vorschubkamm eine endlose, antreibbare Vorschubkette 53 gelagert, die mit zwischen die Werkzeuge 11 bzw. 11' greifenden Mitnehmern 54 besetzt ist.

Beim Ausführungsbeispiel nach den Fig. 13 und 14 ist gezeigt, dass das herausnehmbare Werkzeugmagazin im wesentlichen nur noch aus einer jeweils die beiden gegenüberliegenden Führungsschienen 8, 9 bzw. 8', 9' der Längsführungsbahn 10 bzw. 10' aufnehmenden Rahmeneinheit gebildet ist, während sich alle für den Vorschub benötigten Bauteile an der Werkzeugmaschine befinden. Eine besondere Ausführung dieses aus einer Rahmeneinheit bestehenden Werkzeugmagazins ist in den Fig. 17 und 18 dargestellt. Hierbei sind die beiden Führungsschienen 8, 9 durch ein die aufgenommenen Werkzeuge 11 übergreifendes Portal 55 miteinander verbunden. Das im Querschnitt umgekehrt U-förmige Portal 55 schützt dabei zugleich die Werkzeuge 11. Der Vorschubantrieb der in einem Werkzeugmagazin nach den Fig. 17 und 18 aufgenommenen Werkzeuge 11 erfolgt beispielsweise in der in den Fig. 13 und 14 erläuterten Art durch die Kammzinken 18d eines Vorschubkamms 7d. Auch hierbei werden die Werkzeuge 11 durch federnde Rasteinrichtungen im vorgegebenen Abstand zueinander gehalten, wobei die Rasteinrichtungen entweder in Rastöffnungen der Werkzeuge selbst oder in die Zwischenräume zwischen den Werkzeugen 11 eingreifen können.

## Patentansprüche

1. Werkzeug-Magazineinrichtung für eine Werkzeugmaschine mit mindestens einem Werkzeugmagazin (1), einer Steuerung und einem Werkzeuggreifer (31), der die Werkzeuge (11) einzeln übernimmt und zu einer Werkzeugaufnahme der Werkzeugmaschine transportiert, wobei das Werkzeugmagazin (1) mindestens eine Längsführungsbahn (10) für die Aufnahme von mehreren hintereinander angeordneten, jeweils gleiche Aufnahmeteile (14, 15, 16) aufweisenden Werkzeugen (11) hat, dadurch gekennzeichnet, dass das Werkzeugmagazin (1) und eine Werkzeugmagazinaufnahme (2) mit Mitteln (32) zum lösbaren Ankuppeln des Werkzeugmagazins (1) an der Werkzeugmagazinaufnahme (2) versehen sind und dass die Werkzeugmagazinaufnahme (2) eine Vorschubeinrichtung (24, 43) für jedes einzelne der in dem Werkzeugmagazin (1) befindlichen Werkzeuge (11) enthält.

2. Werkzeug-Magazineinrichtung nach Anspruch 1, dadurch gekennzeichnet, dass jedes Werkzeugmagazin (1) einen Codierträger (33) aufweist, dessen den aufgenommenen Werkzeugen (11) zugeordnete Codierung durch einen jeweils an der Werkzeugmagazinaufnahme (2) angeordneten Codierungsleser (34) erfassbar und einer Steuerungseinrichtung (35) zuführbar ist.

3. Werkzeug-Magazineinrichtung nach Anspruch 1, dadurch gekennzeichnet, dass die Vorschubeinrichtung mindestens einen längsverschiebbaren Vorschubkamm (7) aufweist, dessen Kammzinken (18) jeweils zwischen die einzelnen in der Längsführungsbahn (10, 10') angeordneten Werkzeuge (11, 11') in und ausser Eingriff quer zur Längsführungsbahn bewegbar sind.

4. Werkzeug-Magazineinrichtung nach Anspruch 3, dadurch gekennzeichnet, dass im Werkzeugmagazin (1) ein Arretierungskamm (4) nur quer zur Längsführungsbahn (10, 10') verschiebbar ist, dessen Kammzinken (17) jeweils zwischen die einzelnen in der Längsführungsbahn (10, 10') angeordneten Werkzeuge (11, 11') in und ausser Eingriff bewegbar sind.

5. Werkzeug-Magazineinrichtung nach Ansprüchen 3 und 4, dadurch gekennzeichnet, dass die Querbewegung des Vorschubkamms (7) und des Arretierungskamms (4) im Gleichlauf erfolgt.

6. Werkzeug-Magazineinrichtung nach Anspruch 5, dadurch gekennzeichnet, dass der Arretierungskamm (4) in einem Grundkörper (3) des Werkzeugmagazins (1) querbeweglich geführt ist und dass der Vorschubkamm (7) im Arretierungskamm (4) längsbeweglich geführt ist.

7. Werkzeug-Magazineinrichtung nach Anspruch 1, dadurch gekennzeichnet, dass in dem Werkzeugmagazin (1) zwei parallel nebeneinanderliegende Längsführungsbahnen (10, 10') angeordnet sind.

8. Werkzeug-Magazineinrichtung nach Ansprüchen 5 und 7, dadurch gekennzeichnet, dass jeweils die den beiden Längsführungsbahnen (10, 10') zugeordneten beiden Vorschubkämme (7) und die beiden Arretierungskämme (4) miteinander starr verbunden sind.

9. Werkzeug-Magazineinrichtung nach Ansprüchen 3 und 4 oder Anspruch 8, dadurch gekennzeichnet, dass der Vorschubkamm (7) und der Arretierungskamm (4) jeweils mit einem Antriebszapfen (19 bzw. 25) verbunden sind, die aus dem Werkzeugmagazin (1) herausragen und mit einer in der Werkzeugmaschine angeordneten Antriebseinrichtung (23, 24) in Eingriff stehen.

10. Werkzeug-Magazineinrichtung nach Anspruch 9, dadurch gekennzeichnet, dass die Antriebseinrichtung ein durch einen Längsantrieb (24) in Richtung der Längsführungsbahnen (10, 10') verschiebbares Kulissenbauteil (23) aufweist, dass das Kulissenbauteil (23) eine schräg zu seiner Vorschubrichtung verlaufende Mitnahmenut (22) für den Antriebszapfen (19) des Vorschubkamms (7) und eine breite Längsnut (26) aufweist, in der der Antriebszapfen (25) des Arretierungskamms (4) in Abhängigkeit von der Stellung eines in die Längsnut (26) greifenden Umlenkschiebers (27, 28) wahlweise an der rechten oder der linken Seite der Längsnut (26) geführt ist, und dass die breite Längsnut (26) an ihren Enden durch schräg zur Vorschubrichtung verlaufende Führungsflächen (26', 26'') begrenzt ist.

11. Werkzeug-Magazineinrichtung nach Anspruch 9, dadurch gekennzeichnet, dass der Umlenkschieber (28) an den beiden Enden des Längshubs der Antriebseinrichtung (23, 24) jeweils mit einer gestellfesten schrägen Führungsfläche (29', 29'') in Eingriff tritt, die den Umlenkschieber (28) quer zur Längsbewegungsrichtung der Antriebseinrichtung verschieben.

12. Werkzeug-Magazineinrichtung nach Anspruch 1, dadurch gekennzeichnet, dass die Längsführungsbahnen (10, 10') zwei einander gegenüberliegende Führungsschienen (8, 9, 8', 9') aufweisen, die jeweils in eine Führungsnut (13) am Werkzeug greifen.

13. Werkzeug-Magazineinrichtung nach Anspruch 10, dadurch gekennzeichnet, dass die Führungsnuten (13) und die Führungsschienen (8, 8', 9, 9') im Querschnitt V-förmig sind.

14. Werkzeug-Magazineinrichtung nach Anspruch 10, dadurch gekennzeichnet, dass mindestens eine der beiden Führungsschienen (9, 9') gegen Federkraft querverschiebbar ist.

15. Werkzeug-Magazineinrichtung nach Anspruch 10, dadurch gekennzeichnet, dass der Werkzeuggreifer (31) in die beiden Führungsnuten (13) der Werkzeuge (11, 11') passende Greiferschienen aufweist.

16. Werkzeug-Magazineinrichtung nach Anspruch 15, dadurch gekennzeichnet, dass die beiden Führungsnuten (13) jedes Werkzeugs (11, 11') jeweils eine Rastvertiefung aufweisen, in die ein Rastbauteil der zugeordneten Greiferschiene einrastbar und in der Raststellung verriegelbar ist.

17. Werkzeug-Magazineinrichtung nach Anspruch 1, dadurch gekennzeichnet, dass mehrere Werkzeugmagazine (1) auf beweglich angeordneten Werkzeugmagazinaufnahmen (2) auswechselbar angebracht sind.

18. Werkzeug-Magazineinrichtung nach Anspruch 3, dadurch gekennzeichnet, dass der Vorschubkamm (7a) um seine Längsachse derart schwenkbar ist, das seine Kammzinken (18a) in die Zwischenräume der einzelnen Werkzeuge (11, 11') einschwenkbar sind und dass die Werkzeuge (11, 11') mit einer federnden Rasteinrichtung (38) in Eingriff stehen.

19. Werkzeug-Magazineinrichtung nach Anspruch 3, dadurch gekennzeichnet, dass die Kammzinken (18b) als einzeln am Vorschubkamm (7b) gegen Federkraft schwenkbar gelagerte Klinken ausgebildet sind, die jeweils eine in einer gemeinsamen Richtung abfallende Auflauffläche (45) für die Werkzeuge (11, 11') aufweisen.

20. Werkzeug-Magazineinrichtung nach Anspruch 3, dadurch gekennzeichnet, dass der Vorschubkamm (7c) in Längsrichtung und Querrichtung federnd im Werkzeugmagazin (1) abgestützt ist und dass die Kammzinken (18c) des Vorschubkamms (7c) jeweils eine in einer gemeinsamen Richtung abfallende Auflauffläche (46) für die Werkzeuge (11, 11') aufweisen.

21. Werkzeug-Magazineinrichtung nach Anspruch 1, dadurch gekennzeichnet, dass die Vorschubeinrichtung an mindestens einem von mehreren Magazinaufnahmeplätzen der Werkzeugmagazinaufnahme (2) angeordnet ist und einen längsverschiebbaren Vorschubkamm (7d) aufweist, der derart querverschiebbar ist, dass seine Kammzinken (18d) jeweils zwischen die einzelnen Werkzeuge (11, 11') greifen.

22. Werkzeug-Magazineinrichtung nach Anspruch 1, dadurch gekennzeichnet, dass die Vorschubeinrichtung eine in Richtung der Längsführungsbahn (10, 10') umlaufende Vorschubkette (53) aufweist, die mit zwischen die Werkzeuge (11, 11') greifenden Mitnehmern (54) besetzt ist.

23. Werkzeug-Magazineinrichtung nach Anspruch 12, dadurch gekennzeichnet, dass die beiden gegenüberliegenden Führungsschienen (8, 9; 8', 9') der Längsführungsbahn (10 bzw. 10') miteinander zu einer das herausnehmbare Werkzeugmagazin (11) bildenden Rahmeneinheit verbunden sind.

24. Werkzeug-Magazineinrichtung nach Anspruch 23, dadurch gekennzeichnet, dass die beiden Führungsschienen (8, 9; 8', 9') durch ein die aufgenommenen Werkzeuge (11, 11') übergreifendes Portal (55) miteinander verbunden sind.

**Claims**

1. Tool magazine device for a machine tool with at least one tool magazine (1), with a control means and with a tool gripper (31) which takes the tools (11) individually and conveys them to a tool holder of the machine tool, the tool magazine (1) having at least one longitudinal guideway (10) for accommodating a plurality of tools (11) arranged one behind the other and each having like carrier parts (14, 15, 16), characterised in that the tool magazine (1) and a tool magazine carrier (2) are provided with means (32) for the releasable coupling of the tool magazine (1) to the tool magazine carrier (2), and in that the tool magazine carrier (2) includes means (24, 43) for feeding each individual tool (11) situated in the tool magazine (1).

2. Tool magazine device according to Claim 1, characterised in that each tool magazine (1) has a coding carrier (33) whose coding associated with the accommodated tools (11) can be detected by a coding element (34) disposed on the respective tool magazine carrier (2) and whose coding can be fed to a control means (35).

3. Tool magazine device according to Claim 1, characterised in that the feed means has at least one longitudinally displaceable feed comb (7) whose comb teeth (18) can each be moved transversely to the longitudinal guideway (10, 10') in and out of engagement between the individual tools (11, 11') arranged in the longitudinal guideway.

4. Tool magazine device according to Claim 3, characterised in that in the tool magazine (1) an arresting comb (4) is displaceable only transversely to the longitudinal guideway (10, 10'), the comb teeth (17) of which can each be moved in and out of engagement between the individual tools (11, 11') arranged in the longitudinal guideway (10, 10').

5. Tool magazine device according to Claims 3 and 4, characterised in that the transverse movements of the feed comb (7) and of the arresting comb (4) take place in synchronism.

6. Tool magazine device according to Claim 5, characterised in that the arresting comb (4) is guided for transverse movement in a base member (3) of the tool magazine (1), and in that the feed comb (7) is guided for longitudinal movement in the arresting comb (4).

7. Tool magazine device according to Claim 1, characterised in that two parallel juxtaposed longitudinal guideways (10, 10') are arranged in the tool magazine (1).

8. Tool magazine device according to Claims 5 and 7, characterised in that the two feed combs (7), which are associated with the two longitudinal guideways (10, 10'), and the two arresting combs (4) are rigidly connected to one another, respectively.

9. Tool magazine device according to Claims 3 and 4 or Claim 8, characterised in that the feed comb (7) and the arresting comb (4) are connected to respective drive pins (19 and 25) which project from the tool magazine (1) and are in engagement with a drive means (23, 24) disposed in the machine tool.

10. Tool magazine device according to Claim 9, characterised in that the drive means has a slotted link member (23) displaceable by a longitudinal drive (24) in the direction of the longitudinal guideways (10, 10'), in that the slotted link member (23) has, extending obliquely to its feed direction, an entrainment slot (22) for the drive pin (19) of the feed comb (7) and a wide longitudinal slot (26) in which the drive pin (25) of the arresting comb (4) is guided, depending on the position of a guiding slide (27, 28) engaging in the longitudinal slot (26), optionally on the right or left side of the longitudinal slot (26), and in that the wide longitudinal slot (26) is bounded at its ends by guide surfaces (26', 26'') extending obliquely to the feed direction.

11. Tool magazine device according to Claim 9, characterised in that, at either end of the longitudinal stroke of the drive means (23, 24), the guiding slide (28) comes into engagement with a respective oblique guide surface (29', 29") fixed to the frame, which guide surfaces displace the guiding slide (28) transversely to the longitudinal movement direction of the drive means.

12. Tool magazine device according to Claim 1, characterised in that the longitudinal guideways (10, 10') have two guide rails (8, 9, 8', 9') which are opposite each other and which engage in respective guide grooves (13) in the tool.

13. Tool magazine device according to Claim 10, characterised in that the guide grooves (13) and the guide rails (8, 8', 9, 9') are of V-shaped cross-section.

14. Tool magazine device according to Claim 10, characterised in that at least one of the two guide rails (9, 9') can be displaced transversely against spring force.

15. Tool magazine device according to Claim 10, characterised in that the tool gripper (31) has gripper arms fitting into the two guide grooves (13) of the tools (11, 11').

16. Tool magazine device according to Claim 15, characterised in that the two guide grooves (13) of each tool (11, 11') have a respective detent recess in which a detent member of the associated gripper arm can engage and can be locked in the engaged position.

17. Tool magazine device according to Claim 1, characterised in that a plurality of tool magazines (1) are mounted interchangeably on movably arranged tool magazine carriers (2).

18. Tool magazine device according to Claim 3, characterised in that the feed comb (7a) is pivotable about its longitudinal axis in such a way that its comb teeth (18a) can be swung into the spaces between the individual tools (11, 11'), and in that the tools (11, 11') are in engagement with a resilient stop means (38).

19. Tool magazine device according to Claim 3, characterised in that the comb teeth (18b) are designed as individual pawls pivotably mounted under spring action on the feed comb (7b), which pawls each have, sloping in a common direction, an engagement surface (45) for the tools (11, 11').

20. Tool magazine device according to Claim 3, characterised in that the feed comb (7c) is resiliently supported in the tool magazine (1) in longitudinal direction and transverse direction, and in that the comb teeth (18c) of the feed comb (7c) each have, sloping in a common direction, an engagement surface (46) for the tools (11, 11').

21. Tool magazine device according to Claim 1, characterised in that the feed means is disposed at at least one of several magazine-accommodating positions of the tool magazine carrier (2) and has a longitudinally displaceable feed comb (7d) which can be displaced transversely in such a way that its comb teeth (18d) each engage between individual tools (11, 11').

22. Tool magazine device according to Claim 1, characterised in that the feed means has a feed chain (53) which moves around in the direction of the longitudinal guideway (10, 10') and which is provided with entrainment members (54) engaging between the tools (11, 11').

23. Tool magazine device according to Claim 12, characterised in that the two opposite guide rails (8, 9; 8', 9') of the respective longitudinal guideway (10 and 10') are connected with one another to form a frame unit constituting the removable tool magazine (11).

24. Tool magazine device according to Claim 23, characterised in that the two guide rails (8, 9; 8', 9') are connected with one another by a gantry (55) bridging the accommodated tools (11, 11').

**Revendications**

1. Dispositif de magasinage d'outils pour une machine-outil comportant au moins un magasin d'outils (1), une commande et un dispositif de chargement (31) des outils (11) qui les prend individuellement et qui les transporte au logement destiné à l'outil de la machine-outil, ledit magasin d'outils (1) présentant au moins une glissière longitudinale (10) destinée à recevoir plusieurs outils (11) qui présentent chacun des parties de positionnement (14, 15, 16) identiques et qui sont disposés l'un à la suite de l'autre, caractérisé en ce que le magasin d'outils (1) et un dispositif de support (2) du magasin d'outils sont munis de moyens (32) destinés à coupler de manière amovible ledit magasin d'outils (1) audit dispositif de support (2) du magasin d'outils et en ce que le dispositif de support (2) de magasins d'outils comporte un organe de déplacement (24, 43) pour chaque outil pris individuellement (11) disposé dans le magasin d'outils (1).

2. Dispositif de magasinage d'outils selon la revendication 1, caractérisé en ce que chaque magasin d'outils (1) présente un support codé (33) dont le codage correspondant aux outils (11) emmagasinés peut être saisis par un lecteur de codage (34) agencé au dispositif de support (2) de magasins d'outils, et peut être amené à un dispositif de commande (35).

3. Dispositif de magasinage d'outils selon la revendication 1, caractérisé en ce que le dispositif de déplacement présente au moins un peigne d'avancement déplaçable longitudinalement (7) dont les dents (18) peuvent chaque fois être déplacées entre les divers outils (11, 11') logés dans la glissière longitudinale (10, 10'), transversalement par rapport à ladite glissière longitudinale, les dents (18) étant en prise ou non.

4. Dispositif de magasinage d'outils selon la revendication 3, caractérisé en ce qu'un peigne d'arrêt (4) du magasin d'outils (1) ne peut être déplacé que transversalement par rapport à la glissière (10, 10'), peigne d'arrêt dont les dents (17) peuvent chaque fois être déplacées entre les divers outils (11, 11') logés dans la glissière longitudinale (10, 10'), en étant en prise ou non.

5. Dispositif de magasinage d'outils selon les revendications 3 et 4, caractérisé en ce que les mouvements transversaux du peigne d'avancement (7) et du peigne d'arrêt (4) s'effectuent en synchronisme.

6. Dispositif de magasinage d'outils selon la revendication 5, caractérisé en ce que le peigne d'arrêt (4) est guidé transversalement dans un corps de base (3) du magasin d'outils (1) et en ce que le peigne d'avancement (7) est guidé longitudinalement dans le peigne d'arrêt (4).

7. Dispositif de magasinage d'outils selon la revendication 1, caractérisé en ce que le magasin d'outils (1) comporte deux glissières parallèles adjacentes (10, 10').

8. Dispositif de magasinage d'outils selon les revendications 5 et 7, caractérisé en ce que les deux peignes d'avancement (7) correspondant aux deux glissières (10, 10') et les deux peignes d'arrêt (4) sont chaque fois reliés rigidement entre eux.

9. Dispositif de magasinage d'outils selon les revendications 3 et 4 ou selon la revendication 8, caractérisé en ce que le peigne d'avancement (7) et le peigne d'arrêt (4) sont chacun reliés à un tenon d'entraînement (respectivement 19 et 25) qui fait saillie sur le magasin d'outils (1) et qui est en prise avec un dispositif d'entraînement (23, 24) disposé dans la machine-outil.

10. Dispositif de magasinage d'outils selon la revendication 9, caractérisé en ce que le dispositif d'entraînement présente un élément de construction à coulisse (23) qui est déplacé par un entraînement longitudinal (24) dans la direction des glissières longitudinales (10, 10'), en ce que l'élément de constructions à coulisse (23) présente une rainure d'entraînement (22) inclinée par rapport à la direction du déplacement, destinée au tenon d'entraînement (19) du peigne d'avancement (7), ainsi qu'une large rainure longitudinale (26) dans laquelle est guidé le tenon d'entraînement (25) du peigne d'arrêt (4), soit à gauche, soit à droite de la rainure longitudinale (26), en fonction de la position d'un coulisseau de renvoi (27, 28) engagé dans la rainure longitudinale (26), et en ce que la large rainure longitudinale (26) est délimitée à ses extrémités par des faces de guidage (26', 26") inclinées par rapport à la direction du déplacement.

11. Dispositif de magasinage d'outils selon la revendication 9, caractérisé en ce que le coulisseau de renvoi (28) entre chaque fois en contact, aux deux extrémités de la course longitudinale du dispositif d'entraînement (23, 24), avec une surface de guidage (29', 29") solidaire du bâti, qui déplace le coulisseau de renvoi (28) transversalement par rapport à la direction longitudinale du dispositif d'entraînement.

12. Dispositif de magasinage d'outils selon la revendication 1, caractérisé en ce que les glissières (10, 10') présentent deux rails de guidage opposés (8, 9, 8', 9') qui sont chacun en contact avec une rainure de guidage (13) pratiquée dans l'outil.

13. Dispositif de magasinage d'outils selon la revendication 10, caractérisé en ce que les rainures de guidage (13) et les rails de guidage (8, 8', 9, 9') présentent une section en forme de V.

14. Dispositif de magasinage d'outils selon la revendication 10, caractérisé en ce qu'au moins l'un des deux rails de guidage (9, 9') peut être déplacé transversalement contre l'effet d'un ressort.

15. Dispositif de magasinage d'outils selon la revendication 10, caractérisé en ce que le dispositif de chargement des outils (31) présente des rails de pinçage qui sont adaptés aux deux rainures de guidage (13) des outils (11, 11').

16. Dispositif de magasinage d'outils selon la revendication 15, caractérisé en ce que les deux rainures de guidage (13) de chaque outil (11, 11') présentent chacune un évidement d'encliquetage dans lequel un élément encliquetable du rail de pinçage correspondant peut s'engager et est verrouillable en position engagée.

17. Dispositif de magasinage d'outils selon la revendication 1, caractérisé en ce que plusieurs magasins d'outils sont disposés, de manière à pouvoir être remplacés, sur des dispositifs de support de magasins d'outils (2), agencés de manière mobile.

18. Dispositif de magasinage d'outils selon la revendication 3, caractérisé en ce que le peigne d'avancement (7a) est logé de manière pivotable autour de son axe longitudinal de manière telle que ses dents (18a) pivotent dans les interstices entre les divers outils (11, 11') et en ce que les outils (11, 11') sont retenus par un dispositif de verrouillage à ressort (38).

19. Dispositif de magasinage d'outils selon la revendication 3, caractérisé en ce que les dents (18b) se présentent en tant que loquets logés individuellement de manière pivotable contre l'effet d'un ressort dans le peigne d'avancement (7b), chaque loquet présentant une surface de glissement (45) pour les outils (11, 11'), inclinée selon une direction commune.

20. Dispositif de magasinage d'outils selon la revendication 3, caractérisé en ce que le peigne d'avancement (7c) repose longitudinalement et transversalement par l'intermédiaire d'un ressort dans le magasin d'outils (1) et en ce que chaque dent (18c) du peigne d'avancement (7c) présente une surface de glissement (46) pour les outils (11, 11'), inclinée selon une direction commune.

21. Dispositif de magasinage d'outils selon la revendication 1, caractérisé en ce que le dispositif d'avancement est disposé en au moins un endroit pour la réception d'un magasin d'outils du support de magasins d'outils (2), parmi plusieurs endroits, et présente un peigne d'avancement (7d) déplaçable longitudinalement qui est déplaçable transversalement de manière telle que ses dents (18d) passent chaque fois entre les divers outils (11, 11').

22. Dispositif de magasinage d'outils selon la revendication 1, caractérisé en ce que le dispositif d'avancement présente une chaîne d'avancement (53) tournant dans la direction de la glissière (10, 10'), ladite chaîne d'avancement étant munie de tenons d'entraînement (54) qui agissent entre les outils (11, 11').

23. Dispositif de magasinage d'outils selon la revendication 12, caractérisé en ce que les deux rails de guidage opposés (8, 9; 8′, 9′) de la glissière longitudinale (respectivement 10, 10′) sont reliés entre eux en un cadre unique qui forme le magasin d'outils (11) amovible.

24. Dispositif de magasinage d'outils selon la revendication 23, caractérisé en ce que les deux rails de guidage (8, 9; 8′, 9′) sont reliés entre eux par un portique (55) qui dépasse les outils (11, 11′).

FIG.1

FIG.2

FIG.3

FIG.6

FIG. 4a

FIG. 4b

FIG.5a  FIG.5b  FIG.5c  FIG.5d  FIG.5e

FIG.7

FIG.8

FIG.10

FIG.9

FIG.11

FIG.12

FIG.13

FIG.14

FIG.16

FIG.15

FIG.17

FIG.18